# EUROPÄISCHE PATENTANMELDUNG

(11) **EP 0 780 410 A1**
(43) Veröffentlichungstag der Anmeldung: **25.06.1997**
(21) Anmeldenummer: 96119694.6
(22) Anmeldetag: 09.12.1996
(51) Int. Cl.: C08F 283/06, C08F 291/08, C08G 18/63

(54) **Niedrigviskose Polymerpolyole, ein Verfahren zu ihrer Herstellung sowie ihre Verwendung zur Herstellung von Polyurethanschaumstoffen**

(30) Priorität: 20.12.1995 DE 19547632
(71) Anmelder: BAYER AG, 51368 Leverkusen (DE)
(72) Erfinder: Heinemann, Torsten, Dr., 51065 Köln (DE); Dietrich, Manfred, Dr., 51373 Leverkusen (DE); Jacobs, Gundolf, Dr., 51503 Rösrath (DE); Kratz, Mark R., Dr., League City, TX 77573 (US); Sanders, Josef, Dr., 51373 Leverkusen (DE); Woynar, Helmut, Dr., 41540 Dormagen (DE)

(57) **Zusammenfassung**

Beschrieben wird ein Verfahren zur Herstellung stabiler agglomeratfreier niedrigviskoser Pfropfcopolymer-Dispersionen durch radikalische Polymerisation ethylenisch ungesättigter Monomerer wie Styrol und/oder Acrylnitril mit Polyolverbindungen, wobei man vor Beginn der radikalischen Polymerisation zu einem Basispolyol, welches mindestens 2 Gew.-% eines primäre Hydroxylendgruppen enthaltendes Polyol enthält, eine olefinisch ungesättigte Verbindung, welche mit primären Hydroxylgruppen reagieren kann, zugibt und anschließend die radikalische Polymerisation durchführt. Als olefinisch ungesättigte Verbindungen werden dabei ungesättigte cyclische oder acyclische Anhydride, ungesättigte Säurechloride und/oder ungesättigte Epoxide eingesetzt. Ebenfalls beschrieben wird die Verwendung dieser Pfropfcopolymer-Dispersionen bei der Herstellung von Polyurethankunststoffen nach dem Isocyanat-Polyadditionsverfahren.

## Beschreibung

Die vorliegende Erfindung betrifft die Herstellung von Polymerpolyolen niedriger Viskosität sowie deren Verwendung bei der Herstellung von Polyurethanschaumstoffen.

Unter Polymerpolyolen werden Produkte verstanden, die durch Polymerisation olefinischer Monomere in Polyetherpolyolen ("Basispolyole") erhalten werden können. Als olefinische Monomere werden dabei hauptsächlich ethylenisch ungesättigte Verbindungen wie z.B. Styrol oder Acrylnitril eingesetzt.

Polymerpolyole werden bei der Herstellung von Polyurethan-Weichschaumstoffen eingesetzt.

Die Herstellung von Polymerpolyolen ist beispielsweise in den US-Patentschriften 3 383 351 und 3 304 273 oder in der DE-A 1 152 536 und DE-A 1 152 537 beschrieben.

Die Polymerpolyole sind im Idealfall verhältnismäßig niedrigviskose, feinteilige, nichtsedimentierende Dispersionen des Polymerisats (vorzugsweise eines Acrylnitril/Styrol-Pfropfcopolymeren) in dem im wesentlichen unveränderten Polyetherpolyol. Kennzeichnende Merkmale für Qualität und Verarbeitbarkeit der Polymerpolyole sind Viskosität, Lagerstabilität (Sedimentationsbeständigkeit) und Feinteiligkeit. Diese Eigenschaften werden vor allem durch Art und Mengenverhältnisse der Ausgangsstoffe beeinflußt. Insbesondere der Feststoffgehalt (Monomeranteil im Ansatz) und das Monomerverhältnis (z.B. Styrol/Acrylnitrilverhälthis) haben großen Einfluß auf die Produktqualität.

Die wichtigsten Ziele bei der Herstellung von Polymerpolyolen sind das Erreichen hoher Feststoffgehalte (mindestens 40 %) bei möglichst niedriger Viskosität und bei gleichzeitig ausgezeichneter Produktstabilität. Um die Produktstabilität, d.h. die Unterbindung der Bildung unerwünschter, aus der kontinuierlichen Phase, dem Basispolyol, ausfallender, agglomerierter Polymerpartikel zu erreichen, müssen die Polymerteilchen während der Polymerpolyolherstellung stabilisiert werden. Diese Stabilisierung kann durch den Einbau eines Teils der Moleküle des Basispolyethers in das in situ gebildete Polymere bewirkt werden. Hierbei wird die Effektivität der Stabilisierung beispielsweise durch ein möglichst hohes Molgewicht des Basispolyethers und durch einen möglichst hohen Acrylnitrilanteil im Monomergemisch begünstigt. Während ein hoher Acrylnitrilgehalt die Eigenfarbe der Polymerpolyole und die Verfärbungstendenz damit hergestellter Weichschäume erhöht und damit unerwünscht ist, wird die Viskosität der Polymerpolyole durch den Einsatz von Basispolyolen mit höherem Molekulargewicht erhöht.

Die wichtigste Möglichkeit zur Stabilisierung von Polymerpolyolen nach dem Stand der Technik ist die Mitverwendung von mit der Polyolphase kompatiblen Verbindungen, die ethylenisch ungesättigte, polymerisationsfähige Gruppen enthalten. Diese sogenannten Makromonomeren copolymerisieren mit den Vinylmonomeren, so daß die entstehenden Polymerteilchen durch Polyetherseitenketten sterisch stabilisiert werden und somit gegen Agglomeration und Sedimentation geschützt sind.

Die Herstellung von Polymerpolyolen unter Mitverwendung von Makromonomeren ist beschrieben z.B. in US-PS 3 652 639, US-PS 3 823 201, US-PS 4 460 715, US-PS 4 390 645, US-PS 5 093 412, US-PS 4 342 840. Die ethylenisch ungesättigten Doppelbindungen werden in Polyetherpolyole beispielsweise eingeführt durch Umsetzung mit cyclischen, ungesättigten Carbonsäureanhydriden wie Maleinsäureanhydrid und nachfolgende Umsetzung mit Ethylen- oder Propylenoxid; durch Veresterung mit Acryl- bzw. Methacrylsäure(derivaten); durch Umsetzung mit Allylglycidylether; durch Umsetzung m it einem ungesättigten Isocyanat wie z.B. Isocyanatoalkyl-acrylat und -methacrylat, 1-(1-Isocyanato-1-methylethyl)-3-(1-methylethenyl)-benzol oder NCO-funktionellen Addukten aus einem Polyisocyanat und Hydroxyethyl- bzw. Hydroxypropylacrylat.

Bei allen genannten Verfahren muß das Makromonomer vor der eigentlichen Polymerpolyolherstellung synthetisiert werden. Dies hat z.B. logistische Probleme zur Folge, da immer eine ausreichende Menge Makromonomer zusätzlich zum Basispolyol für die Polymerpolyolherstellung hergestellt und gelagert werden muß.

Es ist daher von Interesse, Verfahren aufzufinden, bei denen niedrigviskose Polymerpolyole mit hohen Feststoffgehalten erhalten werden, die ohne die Verwendung von vorher hergestellten Makromonomeren auskommen.

Wie überraschend gefunden wurde, läßt sich diese Aufgabe mit dem erfindungsgemäßen Verfahren lösen.

Gegenstand der Erfindung ist ein Verfahren zur Herstellung stabiler Pfropfcopolymer-Dispersionen durch radikalische Polymerisation von ethylenisch ungesättigten Monomeren in Basispolyolen, dadurch gekennzeichnet, daß man vor der radikalischen Polymerisation zu einem Basispolyol, welches mindestens 2 Gew.-% eines primäre Hydroxylendgruppen enthaltenden Polyol enthält, eine olefinisch ungesättigte Verbindung, welche mit primären Hydroxygruppen reagieren kann, zugibt und anschließend die radikalische Polymerisation durchführt.

Das im Basispolyol enthaltene Polyol, das mindestens eine primäre Hydroxylgruppe aufweist, ist bevorzugt ein Polyetherpolyol, z.B. die an sich bekannten Additionsprodukte cyclischer Ether wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Diese Polyole sollen Funktionalitäten zwischen 1 und 6 und eine OH-Zahl von 10 bis 100 aufweisen.

Üblicherweise werden die olefinischen Monomere in einer Menge von 20 bis 65 Gew.-%, bezogen auf das Endprodukt, eingesetzt.

Gegebenenfalls kann die Polymerisation in Gegenwart eines niedermolekularen Reglers sowie gegebenenfalls in einem organischen Lösungsmittel durchgeführt werden.

Erfindungsgemäß ist bevorzugt, daß
- als Monomere ethylenisch ungesättigte Monomere, Styrol und/oder Acrylnitril verwendet werden,
- als ethylenisch ungesättigte Monomere Mischungen aus Styrol und Acrylnitril im Gewichtsverhältnis von 20:80 bis 80:20, vorzugsweise von 25:75 bis 75:25 verwendet werden,
- als Basispolyol ein mindestens zwei Hydroxylgruppen aufweisendes Polyol, insbesondere Polyetherpolyole mit einer Funktionalität von 2,5 bis 6 und einer OH-Zahl von bis 100 verwendet wird,
- das Basispolyol ein Polyol enthält, das mindestens eine primäre Hydroxylgruppe aufweist, insbesondere Polyetherpolyole mit einer Funktionalität von 1 bis 6 und einer OH-Zahl von 10 bis 100, vorzugsweise 20 bis 100,
- man die olefinisch ungesättigte Verbindung in einer Menge von 0,05 Gew.-‰ bis 1,5 Gew.-%, vorzugsweise in einer Menge von 0,1 Gew.-‰ bis 1,0 Gew.-%, bezogen auf das Basispolyol, zusetzt.

Die als "Basispolyole" verwendeten mindestens zwei Hydroxylgruppen aufweisenden Polyole sind besonders bevorzugt Polyetherpolyole, z.B. die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die als "Basispolyol" verwendeten Polyetherpolyole sollten Funktionalitäten von 2,5 bis 6 und eine OH-Zahl von 20 bis 100 besitzen. Die Polyetherketten sind aus Propylenoxid- und Ethylenoxideinheiten aufgebaut. Als "Basispolyole" kommen aber auch grundsätzlich Polyesterpolyole mit Funktionalitäten von vorzugsweise 2,5 bis 6 und einer OH-Zahl 20 bis 100 in Frage.

Vor dem Beginn der eigentlichen radikalischen Polymerisation wird zur Reaktionsmischung eine olefinisch ungesättigte, z.B. eine Doppelbindungen enthaltende Verbindung, die bevorzugt mit primären Hydroxylendgruppen reagiert, gegeben, gegebenenfalls in Gegenwart von Katalysatoren. Solche Verbindungen können sein
- ungesättigte cyclische oder acyclische Anhydride wie Maleinsäureanhydrid oder Methacrylsäureanhydrid
- ungesättigte Säurechloride wie Methacrylsäurechlorid
- ungesättigte Epoxide wie Methacrylsäureglycidylester.

Als gegebenenfalls mitzuverwendende Katalysatoren werden beispielsweise Amine wie Dimethylaminopyridin oder Hydroxide wie Kaliumhydroxid verwendet.

Die Polymerpolyole werden durch radikalische Polymerisation ethylenisch ungesättigter Monomerer oder Mischungen ethylenisch ungesättigter Monomere in den beschriebenen Polyetherpolyolen erhalten. Beispiele für derartige Monomere sind Butadien, Styrol, α-Methylstyrol, Methylstyrol, Ethylstyrol, Acrylnitril, Methacrylnitril, Methylmethacrylat, Acrylsäureester. Bevorzugt werden Styrol und Acrylnitril verwendet. Die Menge an ethylenisch ungesättigten Monomeren beträgt 20 bis 65 Gew.-%, bezogen auf die Gesamtmenge an fertigem Produkt. Bei der Verwendung von Styrol und Acrylnitril ist das Verhältnis dieser beiden Monomeren vorzugsweise 20:80 bis 80:20, insbesondere 70:30 bis 30:70 Gewichtsteile.

Die Initiierung der radikalischen Polymerisation erfolgt mit üblichen radikalbildenden Initiatoren. Beispiele für derartige Initiatoren sind organische Peroxide wie Benzoylperoxid, tert.-Butyloctoat, Didesanoylperoxid; Azoverbindungen wie Azoisobutyronitril oder 2,2'-Azobis(2-methylbutyronitril).

Als gegebenenfalls zuzusetzende niedermolekulare Regler werden insbesondere Alkohole wie Methanol, Ethanol, Isopropanol, Butanole, Butandiol, Mercaptane, Allylverbindungen, Enolether wie (Cyclohex-3-enylidenmethoxymethyl)benzol verwendet.

Als gegebenenfalls einzusetzende Lösungsmittel können Kohlenwasserstoffe wie Toluol, Ethylbenzol, Isopropylbenzol, Xylole oder Ketone wie Aceton, Methylethylketon verwendet werden; bevorzugt werden Toluol und Ethylbenzol verwendet.

Die Durchführung des erfindungsgemäßen Verfahrens kann diskontinuierlich oder kontinuierlich erfolgen.

Bei einem diskontinuierlichen Verfahren ist es erforderlich, den Polyether bzw. die Polyethermischung, die das Polyol mit überwiegend primären Hydroxyendgruppen und gegebenenfalls den Regler enthält, vor der eigentlichen radikalischen Polymerisation in einem mit einem Rührwerk ausgestatteten Reaktor zu erhitzen. Während dieses Aufheizvorgangs wird die Doppelbindungen enthaltende Verbindung, die bevorzugt mit primären Hydroxyendgruppen reagiert, gegebenenfalls zusammen mit dem Katalysator zugegeben.

Dann wird die Mischung, die die ethylenisch ungesättigten Monomeren, den Initiator, gegebenenfalls Lösungsmittel und gegebenenfalls einen Teil des einzusetzenden Basispolyols enthält, zudosiert.

Bei einem kontinuierlichen Verfahren wird von der Eindosierung der Mischung, die die ethylenisch ungesättigten Monomeren, den Initiator, gegebenenfalls Lösungsmittel und gegebenenfalls einen Teil des einzusetzenden Basispolyols enthält, in den Polyether bzw. die Polyethermischung, die das Polyol mit überwiegend primären Hydroxyendgruppen und gegebenenfalls den Regler enthält die die Doppelbindungen enthaltende Verbindung, die bevorzugt mit primären Hydroxyendgruppen reagiert gegebenenfalls zusammen mit dem Katalysator eindosiert.

Das Produkt wird kontinuierlich durch einen Überlauf entnommen.

Die Temperatur, bei der die Polymerisation durchgeführt wird, beträgt in der Regel 80 bis 140°C, vorzugsweise 90 bis 130°C.

Nach Beendigung der Polymerisationsreaktion wird das Produkt in üblicher Weise durch Vakuumdestillation von leichtflüchtigen Anteilen wie Restmonomeren, Lösungsmittel und Reglerresten befreit.

Die nach dem erfindungsgemäßen Verfahren hergestellten Polymerpolyole sind hervorragend zur Herstellung von Polyurethankunststoffen nach dem Isocyanat-Polyadditionsverfähren geeignet. Sie sind frei von Polymeragglomeraten jeglicher Art, stabil und niedrigviskos.

Die Erfindung betrifft weiterhin auch stabile, niedrigviskose Pfropfcopolymer-Dispersionen, erhältlich nach dem erfindungsgemäßen Verfahren und die Verwendung der erfindungsgemäß erhältlichen Pfropfcopolymer-Dispersionen als Polyolkomponente bei der Herstellung von Polyurethankunststoffen nach dem Isocyanat-Polyadditionsverfahren.

Die Herstellung von Polyurethankunststoffen, vorzugsweise von weichen, flexiblen Polyurethanschäumen erfolgt durch Umsetzung von
a) organischen Polyisocyanaten mit
b) den erfindungsgemäßen Polymerpolyolen, gegebenenfalls in Gegenwart von
c) weiteren höhermolekularen und/oder niedermolekularen, gegenüber Isocyanaten reaktive Wasserstoffatome enthaltende Verbindungen,
d) Katalysatoren,
e) Wasser und/oder niedrigsiedenden Kohlenwasserstoffen als Treibmittel und
f) Hilfsmitteln und/oder Zusatzstoffen.

Als Ausgangskomponenten werden verwendet:
a) aliphatische, cycloaliphatische, araliphatische, aromatische und heterocyclische Polyisocyanate, wie sie z.B. von W. Siefgen in Justus Liebigs Annalen der Chemie, 362, Seiten 75 bis 136 beschrieben werden, beispielsweise solche der allgemeinen Formel

   Q(NCO)ₙ,

   in der
   - n: 2 bis 5, vorzugsweise 2 bis 3, und
   - Q: einen aliphatischen Kohlenwasserstoffrest mit 2 bis 18, vorzugsweise 6 bis 10 Kohlenstoffatomen, einen cycloaliphatischen Kohlenwasserstoffrest mit 4 bis 15, vorzugsweise 5 bis 10 Kohlenstoffatomen, einen aromataischen Kohlenwasserstoffrest mit 6 bis 15, vorzugsweise 6 bis 13 Kohlenstoffatomen bedeuten, z.B. solche Polyisocyanate, wie sie in der DE-OS 2 832 253, Seiten 10 bis 11, beschrieben werden.
   Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"), Diphenylmethandiisocyanat ("MDI") und Polyphenylpolymethylenpolyisocyanate, wie sie durch Anilin-Formaldehyd-Kondensation und anschließende Phosgenierung hergestellt werden und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. 4,4'- und/oder 2,4'-Diphenylmethandiisocyanat ableiten;
b) die erfindungsgemäßen Polymerpolyole,
c) gegebenenfalls als Ausgangskomponenten Verbindungen mit mindestens 2 gegenüber Isocyanaten reaktionsfähigen Wasserstoffatomen mit einem Molekulargewicht von 40 bis 10 000 g/mol, vorzugsweise Polyetherpolyole, d.h. an sich bekannte Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine sowie die Starterverbindungen selbst;
d) erfindungsgemäß werden gegebenenfalls die in der Polyurethanchemie an sich üblichen Katalysatoren mitverwendet;
e) gegebenenfalls werden als Treibmittel Wasser und/oder niedrigsiedende Kohlenwasserstoffe mitverwendet, z.B. niedrigsiedende Alkane wie Pentan, Cycloalkane wie Cyclopentan, ferner Alkene sowie unter Druck in die Reaktionsmischung eingebracht Gase wie Kohlendioxid;
   f1) gegebenenfalls werden Hilfs- und Zusatzmittel mitverwendet wie oberflächenaktive Zusatzstoffe wie Emulgatoren und Schaumstabilisatoren,
   f2) Reaktionsverzögerer, Zellregler der an sich bekannten Art wie Paraffine, Fettalkohole oder Dimethylpolysiloxane sowie Pigmente oder Farbstoffe und Flammschutzmittel der an sich bekannten Art, ferner Stabilisatoren gegen Alterungs- und Witterungseinflüsse, Weichmacher und fungistatisch und bakteriostatisch wirkende Substanzen.

Beispiele von gegebenenfalls erfindungsgemäß mitzuverwendenden oberflächenaktiven Zusatzstoffen und Schaumstabilisatoren sowie Reaktionsverzögerern, Stabilisatoren, flammhemmenden Substanzen, Weichmachern, Farbstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von G. Oertel, Carl Hanser Verlag, München, 1993, z.B. auf den Seiten 104 bis 127 beschrieben.

Die Herstellung der weichen Polyurethanschäume erfolgt in an sich bekannter Weise, wie z.B. im Kunststoff-Handbuch, Band VII, herausgegeben von G. Oertel, Carl Hanser Verlag, München, 1993, z.B. auf den Seiten 139 bis 263 beschrieben.

Die folgenden Beispiele sollen die Erfindung näher erläutern, ohne sie jedoch in ihrem Umfang zu begrenzen.

### Beispiele

### Ausgangsprodukte

- Polyol A:: Polypropylenoxid/ethylenoxidether der Molmasse 12 020 g/mol auf der Basis Sorbit mit primären OH-Endgruppen
- Polyol B:: Polypropylenoxid/ethylenoxidether der Molmasse 6000 g/mol auf der Basis Trimethylolpropan mit überwiegend primären OH-Endgrupen
- Polyol C:: Polypropylenoxid/ethylenoxidether der Molmasse 3000 g/mol auf der Basis Glycerin mit überwiegend sekundären OH-Endgruppen
- Polyol D:: Polypropylenoxid/ethylenoxidether der Molmasse 4800 g/mol auf der Basis Trimethylolpropan mit überwiegend primären OH-Endgruppen
- Polyol E:: Umsetzungsprodukt von Maleinsäureanhydrid mit Polyol B im Molverhältnis 0,75:1

### Beispiel 1

### Herstellung eines Polymerpolyols entsprechend dem erfindungsgemäßen Verfahren:

465 g Polyol C, 30 g Polyol A und 0,1 g Dimethylaminopyridin werden auf 125°C erwärmt. Während des Aufheizvorgangs werden 1 g Methacrylsäureanhydrid in 35 g Toluol zugegeben. Bei 125°C werden unter Rühren innerhalb von 2 Stunden 263 g Styrol, 142 g Acrylnitril, 6 g 2,2'-Azobis(2-methylbutyronitril) und 100 g Toluol zudosiert. Dann werden nach 10 weiteren Minuten 0,4 g 2,2'-Azobis(2-methylbutyronitril) in 10 g Toluol zur Vervollständigung des Umsatzes gegeben. Nach einer Nachreaktionszeit von 1 Stunde werden Restmonomere und Lösungsmittel über ein Filtertuch der Maschenweite 100 µm filtriert. Das Produkt ist eine weiße, agglomeratfreie Dispersion mit einer Viskosität von 5200 mPa.s/25°C und einem Feststoffgehalt von 45 Gew.-%.

### Beispiele 2 bis 10

Beispiele 2 bis 9 zeigen die Herstellung von Polymerpolyolen nach dem erfindungsgemäßen Verfahren; Durchführung entsprechend Beispiel 1; Mengen in g.

Beispiel 10 (nicht erfindungsgemäß) zeigt im Gegensatz dazu, daß wenn das Umsetzungsprodukt von Maleinsäureanhydrid mit einem Polyol mit überwiegend primären OH-Endgruppen bei der Herstellung von Polymerpolyolen mitverwendet wird, kein stabiles Produkt erhalten wird.
Enolether: (Cyclohex-3-enylidenmethoxymethyl)benzol
MAA: Methacrylsäureanhydrid
MSA: Maleinsäureanhydrid

| | **Beispiel** | | | | | | | | |
|---|---|---|---|---|---|---|---|---|---|
| | 2 | 3 | 4 | 5 | 6 | 7 | 8 | 9 | 10 |
| Polyol A | 30 | 22 | 22 | | | 30 | 22 | | |
| Polyol B | | | | 22 | 22 | | | | |
| Polyol C | 465 | 518 | 518 | 518 | 518 | 465 | 518 | | 465 |
| Polyol D | | | | | | | | 540 | |
| Polyol E | | | | | | | | | 30 |
| MAA | 1 | 1 | | 1,5 | 1,5 | 1 | | | |
| MSA | | | 1,5 | | | | 1,5 | 0,5 | |
| Styrol | 263 | 216 | 216 | 216 | 216 | 263 | 216 | 216 | 216 |
| Acrylnitril | 142 | 144 | 144 | 144 | 144 | 144 | 144 | 144 | 144 |
| Toluol | 135 | 120 | 120 | 120 | 120 | 135 | 120 | 135 | 120 |
| Isopropanol | | | | | | 30 | | | |
| Enolether | 9 | | | 8 | | | 8 | 8 | 8 |
| Feststoff (Gew.-%) | 45 | 40 | 40 | 40 | 40 | 45 | 40 | 40 | 40 |
| Viskosität (mPa.s/25°C) | 4900 | 3500 | 4400 | 3500 | 3700 | 5400 | 4100 | 5700 | -*) |
| - *): Viskosität nicht meßbar; Produkt instabil | | | | | | | | | |

Die Beispiele zeigen, daß Produkte mit unterschiedlichen Feststoffgehalten erhältlich sind, daß verschiedene Regler (Beispiele 2, 5, 8, 9 bzw. 7) eingesetzt werden können, daß auf Regler verzichtet werden kann (Beispiele 3,4, 6) und daß auch aktive Polymerpolyole (mit primären OH-Endgruppen) erhalten werden können (Beispiel 9).

### Beispiele 11 bis 16

### Verwendung der erfindungsgemäßen Polymerpolyole bei der Herstellung von Polyurethanschaumstoffen:

Alle Komponenten außer dem Polyisocyanat werden intensiv miteinander vermischt. Danach wird das Polyisocyanat unter Rühren hinzugegeben und die Reaktionsmischung in eine offene Form gegossen, worin sie zum Polyurethanschaumstoff aufschäumt.

### Verschäumungsbeispiele (Mengen in Gewichtsteilen)

| | Beispiele | | | | | |
|---|---|---|---|---|---|---|
| | 11 | 12 | 13 | 14 | 15 | 16 |
| Polyol F | 50 | 50 | 50 | 50 | 50 | 50 |
| Polymerpolyol (Beispiel 2) | 50 | | | | | |
| Polymerpolyol (Beispiel 3) | | 50 | | | | |
| Polymerpolyol (Beispiel 4) | | | 50 | | | |
| Polymerpolyol (Beispiel 5) | | | | 50 | | |
| Polymerpolyol (Beispiel 6) | | | | | 50 | |
| Polymerpolyol (Beispiel 7) | | | | | | 50 |
| Wasser | 4,5 | 4,5 | 4,5 | 4,5 | 4,5 | 4,5 |
| Stabilisator | 1 | 1 | 1 | 1 | 1 | 1 |
| Katalysator 1 | 0,2 | 0,2 | 0,2 | 0,2 | 0,2 | 0,2 |
| Katalysator 2 | 0,05 | 0,05 | 0,05 | 0,05 | 0,05 | 0,05 |
| Kennzahl | 108 | 108 | 108 | 108 | 108 | 108 |
| Rohdichte (kg/m³) | 26,3 | 25,4 | 27,6 | 25,4 | 26,3 | 28,3 |
| Stauchhärte (kPa) | 6,57 | 6,26 | 6,79 | 6,29 | 6,72 | 7,32 |

- Polyol F:: Polypropylenoxid/ethylenoxidether der Molmasse 3700 g/mol auf der Basis Trimethylolpropan
- Katalysator 1:: Mischung aus Dimethylethanolamin und Bis-N,N-dimethylaminoethylether
- Katalysator 2:: Zinnoctoat
- Stabilisator:: Polyethersiloxan der Fa. Goldschmidt, Essen
- Isocyanat:: Toluylendiisocyanat (Desmodur® T80, Bayer AG)

## Patentansprüche

1. Verfahren zur Herstellung stabiler niedrigviskoser Pfropfcopolymer-Dispersionen durch radikalische Polymerisation von ethylenisch ungesättigten Monomeren mit Polyolen, dadurch gekennzeichnet, daß man vor der radikalischen Polymerisation zu einem Basispolyol, welches mindestens 2 Gew.-% eines primäre Hydroxylendgruppen enthaltendes Polyol enthält, eine olefinisch ungesättigte Verbindung, welche mit primären Hydroxylgruppen reagieren kann, zugibt und anschließend die radikalische Polymerisation durchführt.

2. Verfahren nach Anspruch 1, dadurch gekennzeichnet, daß man als olefinisch ungesättigte Verbindungen ungesättigte cyclische oder acyclische Anhydride, ungesättigte Säurechloride und/oder ungesättigte Epoxide zugibt.

3. Verfahren nach Anspruch 1 oder 2, dadurch gekennzeichnet, daß man die olefinisch ungesättigten Verbindungen bei einer Reaktionstemperatur zwischen 20 und 120°C, bevorzugt zwischen 30 und 80°C, zugibt.

4. Verfahren nach einem der Ansprüche 1 bis 3, dadurch gekennzeichnet, daß man die olefinisch ungesättigte Verbindung in einer Menge von 0,05 Gew.-‰ bis 1,5 Gew.-%, bevorzugt in einer Menge von 0,1 Gew.-‰ bis 1 Gew.-%, bezogen auf das Basispolyol, zugibt.

5. Verfahren nach Anspruch 1 bis 4, dadurch gekennzeichnet, daß das primäre Hydroxylendgruppen enthaltende Polyol mindestens eine primäre Hydroxylgruppe pro Molekül enthält.

6. Verfahren nach Anspruch 1 bis 5, dadurch gekennzeichnet, daß als ethylenisch ungesättigte Monomere Styrol und/oder Acrylnitril eingesetzt werden.

7. Verfahren nach Anspruch 6, dadurch gekennzeichnet, daß als ethylenisch ungesättigte Monomere Mischungen aus Styrol und Acrylnitril im Gewichtsverhältnis von 20:80 bis 80:20, bevorzugt von 25:75 bis 75:25, eingesetzt werden.

8. Verfahren nach Anspruch 1 bis 7, dadurch gekennzeichnet, daß als Basispolyol ein mindestens 2 Hydroxylgruppen aufweisendes Polyetherpolyol mit einer Funktionalität von 1 bis 6 und einer OH-Zahl von 10 bis 100 eingesetzt wird.

9. Stabile, niedrigviskose Pfropfcopolymer-Dispersionen, erhältlich nach einem Verfahren gemäß Anspruch 1 bis 8.

10. Verwendung der nach einem Verfahren gemäß Anspruch 1 bis 8 erhältlichen Pfropfcopolymer-Dispersionen als Polyolkomponente bei der Herstellung von Polyurethankunststoffen nach dem Isocyanat-Polyadditionsverfahren.
